# EUROPÄISCHE PATENTSCHRIFT

(11) **EP 0 879 445 B1**
(45) Veröffentlichungstag und Bekanntmachung des Hinweises auf die Patenterteilung: **28.06.2000**
(21) Anmeldenummer: 96911959.3
(22) Anmeldetag: 28.03.1996
(51) Int. Cl.: G05B 19/05

(54) **EINRICHTUNG ZUR EIGENSICHEREN SIGNALANPASSUNG**
DEVICE FOR INHERENTLY SAFE SIGNAL MATCHING
DISPOSITIF PERMETTANT D'ADAPTER DES SIGNAUX DE MANIERE INTRINSEQUEMENT FIABLE

(30) Priorität: 01.04.1995 DE 19512372
(43) Veröffentlichungstag der Anmeldung: 25.11.1998
(73) Patentinhaber: CEAG Sicherheitstechnik GmbH, 59494 Soest (DE)
(72) Erfinder: DOEGE, Ralf, D-45149 Essen (DE); BECKER, Udo, D-45481 Mühlheim (DE); HORSTMANN, Rolf, D-47447 Moers (DE); REINER, Wolfgang, D-69181 Gauangelloch (DE)
(74) Vertreter: Grünecker, Kinkeldey, Stockmair & Schwanhäusser Anwaltssozietät
(86) Internationale Anmeldenummer: EP9601372
(87) Internationale Veröffentlichungsnummer: WO9631815

(56) Entgegenhaltungen:
- EP-A- 0 556 991
- EP-A- 0 618 518
- WO-A-92/04813
- DE-A- 4 135 749
- US-A- 5 068 778
- AUTOMATISIERUNGSTECHNISCHE PRAXIS - ATP, Bd. 33, Nr. 10, Oktober 1991, MUNCHEN DE, Seiten 511-516, XP000265908 H.J.SCHNEIDER: "achema '91: Sensorsysteme für die Betriebsmesstechnik und Kommunikation im Feld"
- ELEKTROTECHNIK, Bd. 76, Nr. 4, April 1994, WURZBURG DE, Seiten 40-42, XP000447795 A.KARSTEN: "individualisten"

## Beschreibung

Die Erfindung betrifft eine Einrichtung zur eigensicheren Signalanpassung nach dem Oberbegriff des Anspruchs 1.

Eine solche Einrichtung ist aus der WO 92/04813 bekannt. Eine solche Einrichtung zur eigensicheren Signalanpassung soll eine im Sinne des Explosionsschutzes sichere Trennung des Signalflusses zwischen einem Automatisierungssystem und sogenannten Feldgeräten, also Sensoren und Aktoren, in einem explosionsgefährdeten Prozeß bewerkstelligen.

Bei der vorbekannten Einrichtung sind eine Anzahl von Ein/Ausgabemodulen auf einer Rückwandplatine mit einer Montageschiene aufsteckbar. Diese Ein-/Ausgabemodule sind mittels einer ebenfalls auf der Montageschiene aufgesteckten Kommunikationseinheit mit einem Computer des Automatisierungssystems in Verbindung, wobei die Parametrisierung und Initialisierung der Einrichtung direkt von dem Automatisierungssystem erfolgt.

Dies gilt in gleicher Weise für die Durchführung einer Diagnose, die ebenfalls direkt vom Automatisierungssystem durchgeführt wird.

Der Erfindung liegt daher die Aufgabe zugrunde, eine Einrichtung zur eigensicheren Signalanpassung der eingangs genannten Art dahingehend zu verbessern, daß ein modularer Ausbau der Einrichtung mit automatischer Konfigurierung möglich ist. Diese Aufgabe wird durch die zusätzlichen Merkmale des Kennzeichens des Anspruchs 1 gelöst.

Die erfindungsgemäße Einrichtung arbeitet mit Ein-/Ausgabemodulen, die über ein Kommunikationsmodul mit Einrichtungen zur Datenverarbeitung und Datenspeicherung über einen Feldbus mit dem Automatisierungssystem in Verbindung stehen. Dadurch und durch wenigstens eine weitere mit dem Kommunkationsmodul verbundene Standardschnittstelle sind Parameter zur Inititalisierung und automatischen Konfigurierung der erfindungsgemäßen Einrichtung, insbesondere netzausfallsicher im Kommunikationsmodul abspeicher- und wieder aufrufbar. Weiterhin dient die durch das Kommunikationsmodul durchführbare Parametrisierung, insbesondere mit dem modularen Aufbau der Rückwandplatine zur erleichterten Anpassung der erfindungsgemäßen Einrichtung beispielsweise bei einem Ausbau dieser Einrichtung.

In dem Artikel "Sensorsysteme für die Betriebsmeßtechnik und Kommunikation im Feld" aus ATP Automatisierungstechnische Praxis + Messen, Steuern, Regeln 34 (1991, Seiten 511 bis 516) sind verschiedene Sensorsysteme bekannt, von denen ein System beispielsweise über eine weitere Interfacekarte mit Feldgeräten anderer Hersteller zu deren Bedienung verbindbar ist. Ansonsten verfügt dieses System über einen Bus, mit dem in üblicher Weise über Meßumformer weitere Feldgeräte ohne Zwischenschaltung eines Kommunikationsmoduls verbindbar sind.

Weitere Vorteile sowie Ausgestaltungsmöglichkeiten ergeben sich aus den weiteren Patentansprüchen und der nachstehenden Beschreibung eines Ausführungsbeispiels anhand der Zeichnungsfiguren.

Es zeigt:
- Fig. 1: Gesamtanordnung zur Signalanpassung,
- Fig. 2: Ein-/Ausgabemodul,
- Fig. 3: Kommunikationsmodul,
- Fig. 4: Leitungsbruch- und Kurzschlußüberwachungseinrichtungen und
- Fig. 5: Rückwandplatine.

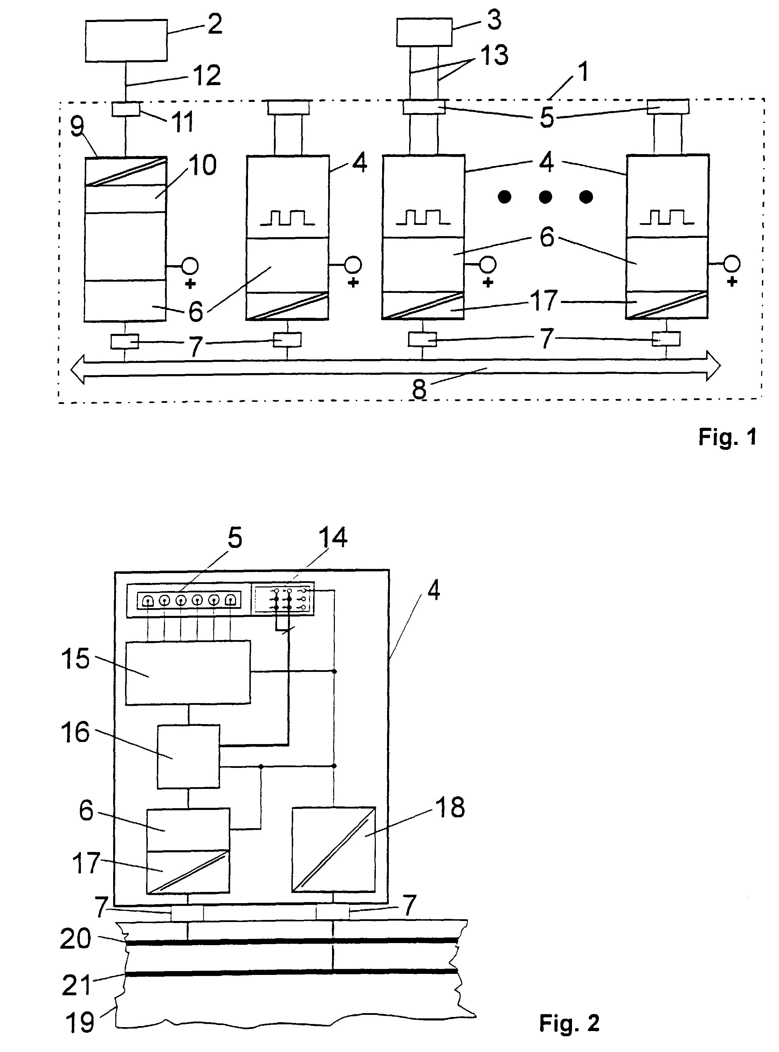

Es wird nachstehend zunächst erläutert, was die Fig. 1 bis 5 im einzelnen zeigen. Eine Beschreibung der Wirkungsweise bzw. mit der Einrichtung ermöglichten Betriebsweise erfolgt anschließend.

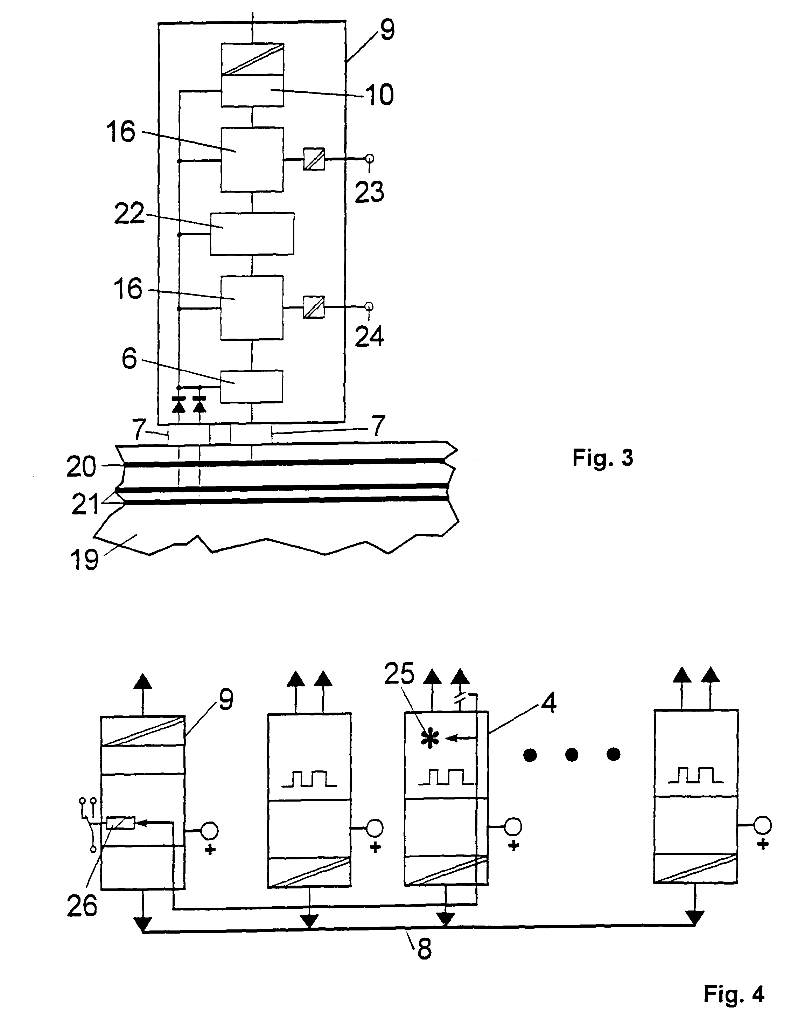

Fig. 1 zeigt eine Einrichtung 1 zur eigensicheren Anpassung der zwischen einem Automatisierungssystem 2 und Feldgeräten 3 auszutauschenden Signale, wobei hauptsächlich die Wege des Signalflusses dargestellt sind. Die Einrichtung 1 enthält mehrere Ein-/Ausgabemodule 4 mit E/A-Anschlüssen 5 für die Feldgeräte 3. Die Ein-/Ausgabemodule 4 enthalten eine Lokalbus-Schnittstelle 6 und sind über eine Kontaktierungseinrichtung 7 mit Leitungen 20 (Fig. 2) eines lokalen Busses 8 verbunden.

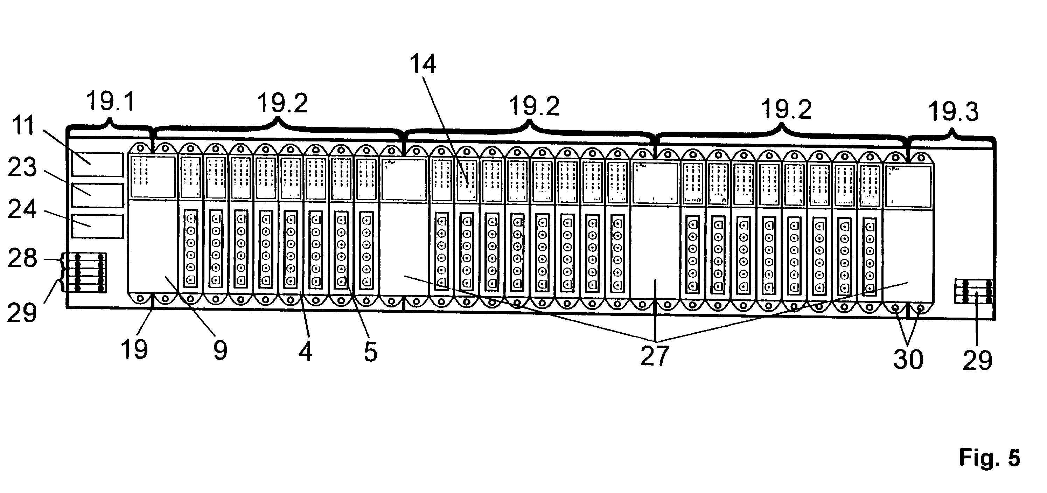

Die Einrichtung 1 enthält außerdem ein Kommunikationsmodul 9, das ebenfalls eine Lokalbus-Schnittstelle 6 und eine Kontaktierungseinrichtung 7 zur Verbindung mit dem lokalen Bus 8 hat. Das Kommunikationsmodul 9 weist eine Feldbus-Schnittstelle 10 und einen Feldbusanschluß 11 auf. Über den Feldbusanschluß 11 steht die Einrichtung 1 über einen Feldbus 12 mit dem Automatisierungssystem 2 in Verbindung. Die Feldgeräte 3 sind jeweils über Leitungen 13 mit den E/A-Anschlüssen 5 verbunden, in einer weiter unten anhand von Fig. 5 erläuterten, möglichen konstruktiven Ausgestaltung befindet sich der Feldbusanschluß 11 auf einer Anfangs-Platine 19.1, statt am Modul 9.

Das Automatisierungssystem 2 kann beispielsweise eine speicherprogrammierbare Steuerung sein. Als Feldgeräte 3 können digitale oder analoge Sensoren oder Aktoren angeschlossen sein. Die Kontaktierungseinrichtung 7 kann beispielsweise eine Steckverbindung oder eine Anordnung von Druckkontaktstiften sein. Der lokale Bus 8 wird vorzugsweise als einfacher, serieller und preisgünstiger Bus ausgeführt. Die Steuerung des lokalen Busses 8 kann vom Kommunikationsmodul 9 aus erfolgen.

Fig. 2 zeigt weitere Einzelheiten des Aufbaues eines Ein-/Ausgabemoduls 4. Das Ein-/Ausgabemodul 4 enthält im Ausführungsbeispiel einen Mikroprozessor 16 zur Signalverarbeitung und einen Baustein 15 zur Signalanpassung. Die Verbindung der Lokalbus-Schnittstelle 6 mit Datenleitungen 20 des lokalen Busses 8 erfolgt über eine sichere galvanische Signal-Trenneinrichtung 17 (ex-i) und die Kontaktierungseinrichtung 7. Die sichere galvanische Trennung kann auch in der Signalanpassung vorgenommen werden. Die Datenleitungen 20 befinden sich als Leiterbahnen auf einer Rückwandplatine 19, die außerdem Stromversorgungs-Leiterbahnen 21 trägt. Die Stromversorgungs-Leiterbahnen 21 führen eine vorstabilisierte Versorgungsspannung (z.B. ±1% Toleranzgrenze). In einem Stromversorgungsbaustein 18 ist eine sichere galvanische Trennung durchgeführt, und je nach Art der Versorgungsspannung auch eine Umformung und gegebenenfalls weitere Stabilisierung. Auf der Modulfrontseite befindet sich neben den E/A-Anschlüssen 5 ein Anzeigefeld 14 zur Signalisierung der internen Zustände (Hilfsenergie, Fehler, Schaltzustand,..).

Fig. 3 zeigt weitere Einzelheiten des Kommunikationsmoduls 9. Das Modul 9 enthält neben zwei Mikroprozessoren 16 einen Datenspeicher 22. Außer der Lokalbus-Schnittstelle 6 und der Feldbus-Schnittstelle 10 sind noch Standard-Schnittstellen 23, 24 vorhanden (z.B. RS 485), die der Parametierung dienen (z.B. mittels PC oder einer lokalen Anzeige- und Bedieneinheit mit herstellerspezifischem und HART-Protokoll). Alle Parameter können im Kommunikationsmodul netzausfallsicher gespeichert werden und werden in der Initialisierungsphase zu den E/A-Modulen übertragen. Aus Fig. 3 ist weiterhin ersichtlich, daß auch eine redundante Hilfsenergieeinspeisung aus redundanten Stromversorgungs-Leiterbahnen 21 vorgesehen sein kann, z.B. wenn mehr als acht Ein-/Ausgabemodule 4 vorhanden sind.

In Fig. 4 ist dargestellt, daß zusätzlich Einrichtungen zur Leitungsbruch- und Kurzschlußüberwachung vorhanden sein können. Solche Funktionen können für jedes Ein-/Ausgabemodul 4 individuell parametriert werden. Fehlerzustände sind am Ein-/Ausgabemodul 4 mit Hilfe einer lichtemittierenden Diode 25 (Teil des Anzeigefeldes 14) anzeigbar. Ein von einem Ein-/Ausgabemodul 4 erkannter Fehler wird über den lokalen Bus 8 zum Kommunikationsmodul 9 gesendet. Solche Fehlermeldungen werden im Datenspeicher 22 des Kommunikationsmoduls 9 gespeichert. Das Kommunikationsmodul 9 kann zusätzlich Einrichtungen 26, z.B. ein Relais mit Relaiskontakten für eine Sammelmeldung von Fehlern enthalten. Eine Übermittlung von Fehlermeldungen kann gleichzeitig mit der Signalübertragung sowohl über den lokalen Bus 8 als auch über den Feldbus 12 erfolgen.

Fig. 5 zeigt einen bevorzugten konstruktiven Aufbau der Einrichtung 1. Im dargestellten Ausführungsbeispiel kommt eine modulare Backplane-Technologie zur Anwendung, wobei die Rückwandplatine 19 sich aus einer Anfangsplatine 19.1 und mehreren kaskadierbaren Mutterplatinen 19.2 und einer Endplatine 19.3 zusammensetzt. Eine Mutterplatine 19.2 ist jeweils zur Aufnahme von beispielsweise acht Ein-/Ausgabemodulen 4 vorgesehen. Die elektrischen Verbindungen zwischen den einzelnen Platinen 19.1, 19.2 und 19.3 werden über Stecker hergestellt.

Die mechanische Verbindung zwischen den Mutterplatinen 19.2 bzw. zwischen einer Mutterplatine 19.2 und der Endplatine 19.3 erfolgt mit Hilfe von Verbindungsmodulen 27, die doppelt so breit sind wie ein Ein-/Ausgabemodul 4. Die Verbindungsmodule enthalten jeweils Einrichtungen zur Vorstabilisierung der Versorgungsspannung für eine Mutterplatine 19.2. Die Anfangsplatine 19.1 wird mit Hilfe des Kommunikationsmoduls 9 mechanisch mit einer Mutterplatine 19.2 verbunden. Das Kommunikationsmodul 9 ist ebenso breit wie die Verbindungsmodule 27. Die Anfangsplatine 19.1 weist den Feldbusanschluß 11 auf, sowie Anschlüsse 23 bzw. 24 zu den Standardschnittstellen. Weitere Anschlüsse auf der Anfangsplatine 19.1 sind Kontaktanschlüsse 28 der Sammelmeldeeinrichtung 26 sowie Anschlüsse für eine in den Zeichnungsfiguren nicht dargestellte Hilfs-Energiequelle. Die E/A-Anschlüsse 5 der Eingabemodule 4 befinden sich jeweils auf der Frontseite der Eingabemodule 4.

Die in den Figuren 1 bis 5 dargestellte Einrichtung 1 ermöglicht eine Wandlung der analogen Signale der Feldgeräte 3 in den Eingabemodulen 4 in digitale Größen. Über den lokalen Bus 8 zum Kommunikationsmodule 9 übertragene Daten werden dort ebenso wie Konfigurations- und Statusinformationen nach einem Memory-map-Verfahren zwischengespeichert. Das Kommunikationsmoduls 9 ermöglicht somit eine asynchrone Verbindung zum Automatisierungssystem 2.

Das System ist selbstkonfigurierend, so daß weder Adressenschalter noch externe Hilfsmittel bzw. Software notwendig sind, um die Funktion oder Position einzelner Module festzulegen. Ein/Ausgabemodule 4 dürfen unter Spannung ausgetauscht werden, wobei die übrigen Module störungsfrei weiter arbeiten. Alle Parameter, z.B. für Temperaturbereiche, Grenzwerte und Fehlererkennung, sind im Kommunikationsmodul netzausfallsicher abgelegt und sind über die Standardschnittstelle 24 für einen PC-Anschluß abrufbar. Eine Parametrierung kann sowohl vom Automatisierungssystem 2 aus erfolgen, sowie auch über die Standardschnittstelle 24.

Vom Feldbus 12 übertragene HART-Protokolle werden transparent an die Ein-/Ausgabemodule weitergeleitet.

Die einzelnen Platinen der Rückwandplatine 19 können in Kunststoffprofile eingeschoben werden, die zur Montage z.B. auf einer DIN-Hutschiene aufgeschnappt werden können. In den Kunststoffprofilen befinden sich überlappende Erdungsschienen, die durch Zusammenschieben der Profilträger miteinander verzahnt und elektrisch verbunden werden. Die elektrische Verbindung der Platinen wird über Stecker hergestellt, die sich auf der Platinenunterseite befinden. Die Verschraubung der doppelt breiten Verbindungsmodule 27 mit den Erdungsschienen von zwei benachbarten Mutterplatinen 19.2 über die Platinengrenzen hinweg stellt die mechanische Verbindung sicher. Aufgesteckte Module 4, 9, 27 werden mit Hilfe von Schrauben 30 verschraubt, wodurch als EMV-konforme Erdung eine elektrische und mechanische Verbindung zwischen Modul und Erdungsschiene (nicht dargestellt) hergestellt wird.

### Bezugszeichenliste

- 1: Einrichtung zur eigensicheren Signalanpassung
- 2: Automatisierungssystem
- 3: Feldgerät
- 4: Ein-/Ausgabemodul
- 5: Anschluß
- 6: Lokalbus-Schnittstelle
- 7: Kontaktierungseinrichtung
- 8: lokaler Bus
- 9: Kommunikationsmodul
- 10: Feldbus-Schnittstelle
- 11: Feldbus-Anschluß
- 12: Feldbus
- 13: Leitungen
- 14: Service-Anschlüsse
- 15: Baustein zur Signalanpassung
- 16: Mikroprozessor
- 17: galvanische Trenneinrichtung
- 18: Stromversorgungsbaustein
- 19: Rückwandplatine
- 19.1: Anfangsplatine
- 19.2: Mutterplatine
- 19.3: Endplatine
- 20: Datenleitung
- 21: Stromversorgungsleitung
- 22: Datenspeicher
- 23: Standardschnittstelle für HART-Kommunikation
- 24: Standardschnittstelle für PC-Anschluß
- 25: lichtemittierende Diode
- 26: Sammelmeldeeinrichtung
- 27: Verbindungsmodul
- 28: Kontaktanschlüsse der Sammelmeldeeinrichtung
- 29: Anschlüsse der Hilfsenergiequelle
- 30: Schrauben

## Patentansprüche

1. Einrichtung zur eigensicheren Anpassung der zwischen einem Automatisierungssystem und Feldgeräten auszutauschenden Signale, wobei eine Rückwandplatine und darauf aufsteckbare Bausteine mit Anschlüssen für die Feldgeräte vorhanden sind, wobei die Rückwandplatine (19) Datenleitungen (20) eines lokalen Busses (8) sowie Stromversorgungsleitung (21) trägt und die aufsteckbaren Bausteine als Ein-/Ausgabemodule (4) mit jeweils einer Lokalbus-Schnittstelle (6), einer Datenverarbeitungseinrichtung (16) und einer Signalanpassungseinrichtung (15) ausgebildet sind sowie ein auf der Rückwandplatine (19) aufgestecktes Kommunikationsmodul (9) mit einer Lokalbus-Schnittstelle (6) angeordnet ist, welches mit einer Feldbus-Schnittstelle (10) in Verbindung ist,
**dadurch gekennzeichnet,**
daß die Rückwandplatine (19) in Einzelplatinen (19.1, 19.2, 19.3) aufgeteilt und dadurch modular erweiterbar ist und das Kommunikationsmodul (9) eine Datenverarbeitungseinrichtung (16) und einen Datenspelcher (221 zur Ablage von über wenigstens eine weitere Schnittstelle (23, 24) erhaltene Parameter zur Parametrisierung der Ein-/Ausgabemodule aufweist.

2. Einrichtung nach Anspruch 1,
**dadurch gekennzeichnet,**
daß das Kommunikationsmodul (9) zur mechanischen Verbindung zweier Einzelplatinen ausgebildet ist.

3. Einrichtung nach einem der vorangehenden Ansprüche,
**dadurch gekennzeichnet,**
daß eine mittels des Kommunkationsmoduls mit einer anderen Einzelplatine verbindbare Anfangsplatine den Feldbusanschluß (11) und die wenigstens eine Schnittstelle (23, 24) als Standardschnittstelle aufweist.

4. Einrichtung nach einem der vorstehenden Ansprüche,
**dadurch gekennzeichnet,**
daß Einrichtungen (27) zur Vorstabilisierung der Versorgungsspannung vorhanden sind.

5. Einrichtung nach einem der vorstehenden Ansprüche,
**dadurch gekennzeichnet,**
daß die Ein-/Ausgabemodule (4) außer dem Baustein zur Signalanpassung (15) einen Mikroprozessor (16) als Datenverarbeitungseinrichtung enthalten.

6. Einrichtung nach einem der vorstehenden Ansprüche,
**dadurch gekennzeichnet,**
daß die Ein-/Ausgabemodule (4) und das Kommunikationsmodul (9) Einrichtungen (16, 22, 25, 26) zum Erkennen und Melden von Leitungsbruch oder Kurzschluß enthalten.

7. Einrichtung nach einem der vorstehenden Ansprüche,
**dadurch gekennzeichnet,**
daß die Ein-/Ausgabemodule (4) und das Kommunikationsmodul (9) Schnittstelleneinrichtung (23, 24) für Service-Zwecke aufweisen.

8. Einrichtung nach einem der vorstehenden Ansprüche,
**dadurch gekennzeichnet,**
daß die Ein-/Ausgabemodule (4) und das Kommunkationsmodul (9) Einrichtungen (17, 18) zur galvanischen Signaltrennung aufweisen.

## Claims

1. A device for the intrinsically safe matching of signals being exchanged between an automating system and field devices, wherein a backwall board and modules, which can be plugged thereonto, with connections for field devices are provided, wherein the backwall board (19) supports data lines (20) of a local bus (8), as well as current supply lines (21), and the modules which can be plugged on are configured as input/output modules (4) with a respective local bus interface (6), a data processing device (16) and a signal matching device (15), and a communications module (9) is provided as well, which is plugged onto the backwall board (19) and has a local bus interface (6), which is connected with a field bus interface (10),
**characterized in**
that the backwall board (19) is divided into individual boards (19.1, 19.2, 19.3) and can therefore be modularly expanded, and the communications module (9) has a data processing device (16) and a memory (22) for storing parameters obtained via at least one further interface (23, 24) for setting parameters for the input/output modules.

2. The device in accordance with claim 1,
**characterized in**
that the communications module (9) is embodied for the mechanical connection of two individual boards.

3. The device in accordance with one of the preceding claims,
**characterized in**
that an initial board, which can be connected by means of the communications module with another individual board, has the field bus connection (11) and the at least one interface (23, 24) as the standard interface.

4. The device in accordance with one of the preceding claims,
**characterized in**
that devices (27) for pre-stabilizing the supply voltage are provided.

5. The device in accordance with one of the preceding claims,
**characterized in**
that the input/output modules (4) contain, besides a module for signal matching (15), a microprocessor (16) as a data processing device.

6. The device in accordance with one of the preceding claims,
**characterized in**
that the input/output modules (4) and the communications module (9) contain devices (16, 22, 25, 26) for detecting and reporting of line breaks or short circuits. -,

7. The device in accordance with one of the preceding claims, ^{'}
**characterized in**
that the input/output modules (4) and the communications module (9) comprise interface devices (23, 24) for service purposes.

8. The device in accordance with one of the preceding claims,
**characterized in**
that the input/output modules (4) and the communications module (9) comprise devices (17, 18) for galvanic signal separation.

## Revendications

1. Dispositif pour l'adaptation à sécurité intrinsèque de signaux devant être échangés entre un système d'automatisation et des appareils sur champ, une platine de face arrière et des éléments pouvant être emboîtés sur celle-ci comprenant des connexions pour les appareils sur champ, étant prévus, la platine de face arrière (19) portant des lignes de données (20) d'un bus local (8) ainsi qu'une ligne d'alimentation en courant (21), et les éléments pouvant être emboîtés étant des modules d'entrée et de sortie (4) comprenant chacun une interface de bus local (6), un dispositif de traitement de données (16) et un dispositif d'adaptation de signaux (15), et un module de communication (9) emboîté sur la platine de face arrière (19) et comportant une interface de bus local (6), étant prévu, module qui est en liaison avec une interface de bus de champ (10),
caractérisé en ce que
la platine de face arrière (19) est divisée en des platines individuelles (19.1, 19.2, 19.3), et de ce fait extensible de façon modulaire, et en ce que le module de communication (9) comporte un dispositif de traitement de données (16) et un mémoire de données (22) pour le stockage de paramètres reçus par au moins une interface supplémentaire (23,24) pour le paramétrage des modules d'entrée et de sortie.

2. Dispositif selon la revendication 1,
caractérisé en ce que
le module de communication (9) est réalisé pour la jonction mécanique de deux platines individuelles.

3. Dispositif selon l'une des revendications précédentes,
caractérisé en ce qu'
une platine de début pouvant être connectée à une autre platine individuelle au moyen du module de communication comporte le raccord de bus de champ (11), et l'au moins une interface (23,24) en tant qu'interface standard.

4. Dispositif selon l'une des revendications précédentes,
caractérisé en ce que
des dispositifs (27) pour la pré-stabilisation de la tension d'alimentation sont prévus.

5. Dispositif selon l'une des revendications précédentes,
caractérisé en ce que
les modules d'entrée et de sortie (4) comprennent en sus de l'élément pour l'adaptation de signaux (15), un microprocesseur (16) en tant que dispositif de traitement de données.

6. Dispositif selon l'une des revendications précédentes,
caractérisé en ce que
les modules d'entrée et de sortie (4) et le module de communication (9) comprennent des dispositifs (16,22,25,26) pour la détection et la signalisation de ruptures de lignes ou de courts-circuits.

7. Dispositif selon l'une des revendications précédentes,
caractérisé en ce que
les modules d'entrée et de sortie (4) et le module de communication (9) comportent des dispositifs d'interface (23,24) pour des fins de services.

8. Dispositif selon l'une des revendications précédentes,
caractérisé en ce que
les modules d'entrée et de sortie (4) et le module de communication (9) comportent des dispositifs (17,18) pour la séparation de signaux galvanique.
